Europäisches Patentamt

European Patent Office

Office européen des brevets

(11) Publication number: **0 243 505 B1**

# EUROPEAN PATENT SPECIFICATION

(45) Date of publication of patent specification: **07.10.92**    (51) Int. Cl.⁵: **C08L 67/06**, C08L 67/02, C08L 47/00, C08F 299/00

(21) Application number: **86906445.1**

(22) Date of filing: **28.10.86**

(86) International application number:
**PCT/JP86/00543**

(87) International publication number:
**WO 87/02687 (07.05.87 87/10)**

(54) **LOW-SHRINKAGE UNSATURATED POLYESTER RESIN COMPOSITION.**

(30) Priority: **29.10.85 JP 240662/85**

(43) Date of publication of application:
**04.11.87 Bulletin 87/45**

(45) Publication of the grant of the patent:
**07.10.92 Bulletin 92/41**

(84) Designated Contracting States:
**DE FR GB SE**

(56) References cited:
FR-A- 2 152 517          FR-A- 2 176 877
JP-A-05 430 285          JP-A-54 124 092
JP-A-54 163 991          JP-B-04 914 145

(73) Proprietor: **NIPPON SHOKUBAI CO., LTD.**
**1-1, Koraibashi, 4-chome**
**Chuo-ku, Osaka-shi(JP)**

(72) Inventor: **MAKI, Yoshikazu**
**A-1008, 8, 4-chome**
**Kamishinden, Toyonaka-shi Osaka-fu**
**565(JP)**
Inventor: **UNO, Yoshinori**
**27-404, 3-9, Nankonaka**
**Suminoe-ku, Osaka-shi Osaka-fu 559(JP)**
Inventor: **OKA, Shigeru**
**4-52, Nakanoshimacho, Suita-shi**
**Osaka-fu 564(JP)**

(74) Representative: **Rees, David Christopher et al**
**Kilburn & Strode 30 John Street**
**London WC1N 2DD(GB)**

Rank Xerox (UK) Business Services

## Description

This invention relates to a low-shrinkage unsaturated polyester resin composition. More particularly, it relates to a low-shrinkage unsaturated polyester resin composition which is usable as a sheet molding compound (SMC) and a bulk molding compound (BMC).

The unsaturated polyester resins which, comprise unsaturated polyesters resulting from the reaction of polybasic acids including unsaturated polybasic acids with polyhydric alcohols or alkylene oxides and copolymerizable monomers are utilized as useful thermosetting resins in a wide variety of applications. Particularly in recent years, SMC's and BMC's incorporating therein glass fibers and fillers have been developed for press molding and injection molding and are put to use in quantity.

Since these unsaturated polyester resins entail heavy shrinkage in the process of curing, however, they have the disadvantage that the shaped articles thereof are deficient in dimensional accuracy, liable to sustain cracks, and apt to form inferior surface smoothness.

For the purpose of eliminating this disadvantage, there have been developed numerous methods such as, for example, a method which precludes the drawbacks by incorporating in the highly reactive unsaturated polyester resins such thermoplastic resins as polystyrene, polyalkyl methacrylates, polyvinyl acetate, and saturated polyesters, (Japanese Patent Publications SHO 42-(1967)-8,787 and SHO 46(1971)-15,431, Japanese Patent Laid-Open SHO 48(1973)-20,888, Japanese Patent Laid-Open SHO 48(1973)-79,889, and Japanese Patent Laid-Open SHO 52(1977)-996). These efforts have been widening the range of applications of unsaturated polyester resins. These methods of prior inventions are not yet fully satisfactory for such applications which make a peremptory demand on perfect smoothness of shaped articles such as exterior parts of automobiles.

The conventional low-shrinkage unsaturated polyester resin compositions which comprise unsaturated polyesters, copolymerizable monomers, and saturated polyesters are capable of decreasing the ratios of shrinkage or even causing expansion of volume during the course of molding. They are nevertheless deficient in ability to give desired surface smoothness to shaped articles, particularly those shaped articles which have ribs or bosses on the rear surfaces thereof.

Further, the conventional low-shrinkage unsaturated polyester resin compositions have the problem that when SMC's are being prepared by kneading the resin compositions with fillers and impregnating glass fibers with the resulting pastes, the pastes are so viscous as to prevent the fillers from being used in amply large amounts or prevent the glass fibers from being sufficiently impregnated with the pastes and the shaped articles of the SMC's obtained at all are deficient in mechanical strength. Also in the case of BMC's whose preparation requires the pastes to be mechanically kneaded with glass fibers, the conventional low-shrinkage unsaturated polyester compositions suffer from the disadvantage that the moldings of the BMC's are deficient in mechanical strength because the damage inflicted on the glass fibers by the mechanical agitation increases in proportion as the viscosity of the pastes is heightened.

A quick-setting resin composition which is obtained by combining an unsaturated polyester resin composed of an unsaturated polyester and a copolymerizable monomer with a liquid polybutadiene resin having a polymerizable unsaturated bond attached to the terminal thereof and a saturated polyester resin has been proposed for use as an embedding varnish (Japanese Patent Laid-Open SHO 55(1980)-43,151). This resin composition, however, has the disadvantage that its moldings inevitably acquire surfaces which lack smoothness owing to heavy undulation and retain dirt owing to exudation of polybutadiene. This particular resin composition, therefore, has proved to be unfit for use as a resin composition in SMC's and BMC's.

An object of this invention, therefore, is to provide a novel low-shrinkage unsaturated polyester resin composition. Another object of this invention is to provide a low-shrinkage unsaturated polyester resin composition which is capable of forming moldings which excel in surface smoothness and mechanical strength.

The objects described above are accomplished by a low-shrinkage unsaturated polyester resin composition which comprises (a) 20 to 50% by weight of an unsaturated polyester having a number average molecular weight of not more than 300 per double bond, (b) 25 to 65% by weight of a copolymerizable monomer, (c) 5 to 25% by weight of a saturated polyester having a number average molecular weight in the range of 3,000 to 30,000, and (d) 2 to 20% by weight of liquid isoprene rubber or a 10 to 90% hydride thereof, providing that the total of the components (a), (b), (c), and (d) is 100% by weight.

The unsaturated polyester (a) to be used in the present invention is the product of reaction of an acid component comprising an $\alpha$, $\beta$-unsaturated dibasic acid or an its derivative and optionally a saturated dibasic acid with a polyhydric alcohol or an alkylene oxide.

As examples of the $\alpha$, $\beta$-unsaturated dibasic acid or its derivative, there can be cited maleic anhydride, maleic acid, fumaric acid, halogenated maleic anhydrides, itaconic acid, and citraconic acid. One member or a mixture of two or more members selected from the group mentioned above can be used.

As examples of the saturated dibasic acid, there can be cited phthalic anhydride, isophthalic acid, terephthalic acid, adipic acid, tetrahydrophthalic anhydride, hexahydrophthalic anhydride, tetrachlorophthalic anhydride, tetrabromophthalic anhydride, 3,6-endomethylene-tetrahydrophthalic acid, sebacic acid, succinic acid, and succinic anhydride. One member or a mixture of two or more members selected from the foregoing group can be used.

As examples of the polyhydric alcohol, there can be cited ethylene glycol, diethylene glycol, triethylene glycol, propylene glycol, dipropylene glycol, butanediol-1,3, butanediol-1,4, butanediol-2,3, neopentyl glycol, pentanediol-1,5, hexanediol-1,6, 2,2,4-trimethyl pentanediol-1,3, glycerol, trimethylolethane, trimethylolpropane, hydrogenated bisphenol A, and adduct of bisphenol A with ethylene oxide or propylene oxide. One member or a mixture of two or more members selected from the group mentioned above can be used.

Typical examples of the alkylene oxide are ethylene oxide, propylene oxide, butylene oxide, and epichlorohydrin. One member or a mixture of two or more examples selected from the group mentioned above can be used.

The reaction can be carried out by the conventional method in the current of an inert gas at a temperature in the range of 150° to 250°C, preferably 180 to 220°C.

The number average molecular weight of the unsaturated polyester (a), though not specifically defined, is desired to fall in the range of 800 to 3,000. If the molecular weight is less than 800, the low-shrinkage unsaturated polyester resin composition to be obtained is deficient in resistance to water or resistance to heat and, during the preparation of SMC or BMC, fails to produce, through the reaction thereof with a metal oxide being used as a thicknener, sufficient viscosity. If the molecular weight exceeds 3,000, the paste produced by mixing the resin composition with a filler acquires too high viscosity to permit smooth preparation of a SMC or BMC.

The number average molecular weight of the unsaturated polyester (a) per double bond is not more than 300, preferably in the range of 150 to 260. If this molecular weight exceeds 300, the effect of decreasing shrinkage of the resin composition is not sufficient and the moldings of the resin composition suffer from poor surface smoothness.

The amount of the unsaturated polyester (a) to be used in the resin composition is in the range of 20 to 50% by weight, preferably 25 to 40% by weight, based on the total amount of the components (a), (b), (c), and (d). If the amount is less than 20% by weight or if it exceeds 50% by weight, the effect of decreasing shrinkage of the resin composition is insufficient and the moldings of the resin composition have poor surface smoothness.

As the copolymerizable monomer (b) for the resin composition of the present invention, any of the copolymerizable monomers usually adopted in the preparation of unsaturated polyester resins can be used. As examples of the copolymerizable monomer, there can be cited aromatic type monomers such as styrene, chlorostyrene, α-methylstyrene, p-methylstyrene, vinyl toluene, divinyl benzene, and diallyl phthalate; alkyl methacrylates such as methyl methacrylate, ethyl methacrylate, isopropyl methacrylate, and lauryl methacrylate; and alkyl acrylates such as methyl acrylate, ethyl acrylate, isopropyl acrylate, butyl acrylate, and lauryl acrylate. One member or a mixture of two or more members selected from the group mentioned above can be used. The amount of the copolymerizable monomer (b) to be used in the resin composition is in the range of 25 to 65% by weight, preferably 35 to 55% by weight, based on the total amount of the components (a), (b), (c), and (d). If this amount is less than 25% by weight, the paste prepared by mixing the resin composition with the filler has too high viscosity to permit easy production of a SMC or BMC. If the amount exceeds 65% by weight, the effect of decreasing shrinkage of the resin composition is not sufficient and the moldings of the resin composition suffer from poor surface smoothness.

The saturated polyester (c) to be used in this invention is the product of condensation of a saturated dibasic acid as an acid moiety and glycols as a polyhydric alcohol moiety. As examples of the saturated dibasc acid, there can be cited isophthalic acid, terephthalic acid, adipic acid, succinic acid, azelaic acid, and sebacic acid. One member or a mixture of two or more members selected from the group mentioned above can be used. Adipic acid, isophthalic acid, or terephthalic acid, particularly among other acids cited above, is desired to be contained in the aforementioned acid moiety in a proportion of not less than 50 mol%, preferably 70 mol%.

As examples of the glycol, there can be cited ethylene glycol, diethylene glycol, triethylene glycol, propylene glycol, dipropylene glycol, butanediol-1,3, butanediol-1,4, butanediol-2,3, neopentyl glycol, pentanediol-1,5, and pentanediol-1,6. One member or a mixture of two or more members selected from the gorup mentioned above can be used. Ethylene glycol, diethylene glycol or dipropylene glycol, particularly among other glycols cited above, is desired to be contained in the polyhydric alcohol moiety in a proportion of not less than 50 mol%, preferably not less than 70 mol%.

The nubmer average molecular weight of the saturatd polyester (c), though not specifically defined, is desired to fall in the range of 3,000 to 30,000, preferably 4,000 to 15,000. If the molecualr weight is less than 3,000, the effect of decreasing shrinkage of the resin composition is not sufficient. If this molecular weight exceeds 30,000, the paste prepared by mixing the resin composition with a filler has too high viscosity to permit smooth production of a SMC or BMC. The amount of the saturated polyester (c) to be used in the resin composition is in the range of 5 to 25% by weight, preferably 7 to 20% by weight, based on the total amount of the components (a), (b), (c), and (d). If this amount is less than 5% by weight, the effect of decreasing shrinkage of the resin composition is not sufficient and the moldings of the resin composition suffer from poor surface smoothness. If this amount exceeds 25% by weight, the paste prepared by mixing the resin composition with a filler has too high viscosity to permit smooth production of a SMC or BMC.

The liquid isoprene rubber (d) to be used in the present invention is in a liquid state at normal room temperature. The number molecular weight of this liquid isoprene rubber is in the range of 3,000 to 50,000, preferably 7,000 to 30,000. This liquid isoprene rubber is desired to contain in the molecular unit thereof or at the terminal thereof an acid group in an amount of 10 to 40, preferably 15 to 30, as acid number. The incorporation of this acid group in the liquid isoprene rubber enables the rubber to acquire improved compatibility with the unsaturated polyester resin and minimizes the possibility that during the molding of a moldings of SMC or BMC, the die used for this molding will be smeared owing to the exudation of this liquid isoprene rubber from the resin composition. As means of incorporating this acid group in the liquid isoprene rubber, a method which comprises copolymerizing isoprene with maleic anhydride and allowing the resulting copolymer to react with water or an alcohol such as methanol, ethanol, isopropanol or butanol and a method which comprises copolymerizing isoprene with maleic acid or a monoester of maleic acid are conceivable. It goes without saying that this invention is not restrained in any way by the method used for the introduction of this acid group into the liquid isoprene rubber. In place of the liquid isoprene rubber, a 10 to 90%, preferably 60 to 85%, hydride of the isoprene rubber may be used as effectively as the isoprene rubber itself.

A 60-85% hydride of an isoprene rubber means a rubber, wherein the hydrogenation ratio of said rubber is in the range of 60-85%.

The amount of the liquid isoprene rubber (d) to be used in the resin composition is in the range of 2 to 20% by weight, preferably 5 to 15% by weight, based on the total amount of the components (a), (b), (c) and (d). If this amount is less than 2% by weight or it exceeds 20% by weight, the effect of decreasing shrinkage of the resin composition is not sufficient and the moldings of the resin composition suffer from poor surface smoothness. When the rubber has a large molecular weight, it assumes a solid state. If the rubber is used in its solid state, the paste prepared by mixing the resin composition with a filler has so high viscosity as to render production of a BMC or SMC extremely difficult.

As the filler to be mixed with the resin composition in the preparation of a SMC or BMC, such an inorganic substance as calcium carbonate, aluminum hydroxide, alumina, silica, clay, feldspar, river sand, or white marble is used in a powdered form in an amount in the range of 0 to 400 parts by weight, preferably 100 to 300 parts by weight, most preferably 150 to 250 parts by weight, based on 100 parts by weight of the resin composition. As the reinforcing agent, fibers such as glass fibers, carbon fibers, aromatic polyamide fibers, or vinylon fibers are used in an amount of 0 to 400 parts by weight, preferably 10 to 300 parts by weight, most preferably 30 to 200 parts by weight, based on 100 parts by weight of the resin composition.

Optionally, the resin composition of the present invention may incorporate therein a thickener such as magnesium oxide or magnesium hydroxide, a known shrinkage depressant such as polystyrene, a silane coupling agent, a release agent such as calcium stearate or paraffin, a thixotropic agent, a plasticizer, a pigment, a coloring agent, a flame retardant, or a flame-proofing agent.

The low-shrinkage unsaturated polyester resin composition of the present invention which is obtained as described above is required to incorporate therein a radical polymerization initiator before it is molded in a prescribed shape under application of heat and pressure. Examples of the radical polymerization initiator include t-butyl peroxybenzoate, benzoyl peroxide, methylethyl ketone peroxide, cumene hydroperoxide, t-butyl peracetate, and 2,5-dimethylhexyl-2,5-diperoxy benzoate. The polymerization initiator is used in the resin composition in an amount falling in the range of 0.2 to 10% by weight, preferably 0.5 to 5% by weight, based on the amount of the resin composition.

A SMC using the resin composition is obtained by mixing the resin composition with the aforementioned filler and reinforcing material, optionally in combination with other additives such as a shrinkage depressant, a silane coupling agent, and a release agent, molding the resulting mixture in a prescribed shape, and allowing the molded mass to age at a temperatrue in the range of 20° to 60°C, preferably 30° to 50°C, for a period in the range of 5 to 300 hours, preferably 10 to 100 hours.

A BMC is similarly obtained by the known method using the aforementioned additives and reinforcing material as required.

Now, the present invention will be described below more specifically with reference to working examples. Wherever the term "parts" is mentioned in these working examples, it means "parts by weight" unless otherwise specified. Further, the values of the number average molecular weight in these working examples were measured with a high performance liquid chromatography (an instrument from Nippon Waters Co., Ltd., Japan, type 201G).

Example 1

Under a current of nitrogen gas, 98 parts of maleic anhydride and 80 parts of propylene glycol were subjected to condensation reaction at 200°C for 8 hours, to obtain an unsaturated polyester having an acid number of 25 and a number average molecular weight of 1,500, i.e., a number average molecular weight of 160 per double bond. An unsaturated polyester resin was obtained by dissolving 60 parts of the unsaturated polyester obtained as described above and 0.01 part of hydroquinone in 40 parts of styrene (hereinafter referred to as "UP-1").

Separately, 146 parts of adipic acid, 37 parts of ethylene glycol, and 34 parts of propylene glycol were subjected under a current of nitrogen gas to dehydration condensation at temperatures up to 220°C, to obtain a saturated polyester (hereinafter referred to as "SP-1"). The number average molecular weight of the SP-1 was 6,500.

Then, a low-shrinkage unsaturated polyester resin composition (hereinafter referred to as "resin composition (1)") was obtained by mixing 50 parts of the UP-1, 10 parts of the SP-1, 30 parts of styrene, and 10 parts of liquid isoprene rubber (having a number average molecular weight of 23,000 and an acid number of 24).

A paste was prepared by stirring the resin composition (1) with 1 part of t-butyl peroxybenzoate, 4 parts of zinc stearate, and 200 parts of calcium carbonate. This paste had a viscosity of 650 poises at 30°C. Then, 100 parts of glass fibers 25 mm in length were impregnated with an impregnant obtained by mixing the paste with 1.0 part of magnesium oxide. The resulting mass was molded in the shape of a sheet between two polyethylene sheets and left aging at 40°C for 40 hours, to obtain a SMC. In a die 300 mm x 300 mm in size, the SMC was press molded for three minutes under the conditions of 140°C of temperature and 60 kg/cm$^2$ of pressure, to obtain an article in the shape of a flat plate 2 mm in thickness. When this plate was tested for undulation the undulation was 4 to 5 microns per 10 cm of length. By using the method of JIS K-6911, the molding shrinkage of this SMC was found to be -0.06 % (swelling).

Example 2

An unsaturated polyester having an acid number of 26, a number average molecular weight of 2,000, and a number average molecular weight of 240 per double bond was obtained from 98 parts of maleic acid, 120 parts of hydrogenated bisphenol A, and 40 parts of propylene glycol. An unsaturated polyester resin (hereinafter referred to as "UP-2") was obtained by mixing 60 parts of the aforementioned unsaturated polyester with 40 parts of styrene and 0.01 part of hydroquinone.

Then, a low-shrinkage unsaturated polyester resin composition of the present invention (hereinafter referred to as "resin composition (2)") was obtained by mixing 50 parts of the UP-2 with 15 parts of the SP-1 obtained in Example 1, 27 parts of styrene, and 8 parts of liquid isoprene rubber (having a number average molecular weight of 23,000 and an acid nubmer of 24).

A paste was obtained by stirring the resin composition (2) obtained as described above with 1 part of t-butylperoxy benzoate, 4 parts of zinc stearate, and 200 parts of calcium carbonate. This paste had a viscosity of 750 poises at 30°C. A SMC was obtained by following the procedure of Example 1, using an impregnant prepared by mixing the paste with 0.7 part of magnesium oxide.

When this SMC was molded by following the procedure of Example 1, a flat plate consequently obtained showed an undulation of 4 to 5 microns. The molding shrinkage of this flat plate was -0.05% (swelling).

Example 3

A low-shrinkage unsaturated polyester resin composition of the present invention (hereinafter referred to as "resin composition (3)") was obtained by following the procedure of Example 1, excepting saturated polyester (having a number average molecular weight of 7,000) obtained from 166 parts of terephthalic acid and 108 parts of diethylene glycol was used in the place of the SP-1. A SMC was produced from this resin composition (3) by faithfully following the procedure of Example 1, except that the amount of magnesium oxide was changed to 0.8 part. When this SMC was molded by following the procedure of Example 1, a flat plate consequently obtained showed an undulation of 3 to 4 microns. The molding shrinkage of this flat plate was -0.04% (swelling).

Example 4

A low-shrinkage unsaturated polyester resin composition (hereinafter referred to as "resin composition (4)") was obtained by following the procedure of Example 1, excepting a saturated polyester (having a number average molecular weight of 7,500) (hereinafter referred to as "SP-2") obtained from 146 parts of adipic acid and 108 parts of diethylene glycol was used in place of the SP-1. A SMC was obtained using the resin composition (4) by following the procedure of Example 1, except that the amount of magnesium oxide was changed to 0.8 part. When this SMC was molded by following the procedure of Example 1, a flat plate consequently obtained showed an undulation of 4 to 5 microns. The molding shrinkage of this flat plate was -0.05% (swelling).

Example 5

A low-shrinkage unsaturated polyester resin composition of the present invention (hereinafter referred to as "resin composition (5)") was obtained by following the procedure of Example 2, excepting the SP-2 was used in place of the "SP-1". A SMC was prepared using this resin composition (5) by following the procedure of Example 1, except that the amount of magnesium oxide was changed to 0.8 part. When this SMC was molded by following the procedure of Example 1, a flat plate consequently obtained had an undulation of 4 to 5 microns. The molding shrinkage of this flat plate was -0.05% (swelling).

Example 6

A low-shrinkage unsaturated polyester resin composition of the present invention and a molding of a flat plate were obtained by following the procedure of Example 2, excepting a saturated polyester (having a number average molecular weight of 6,300) obtained from 146 parts of adipic acid and 140 parts of dipropylene glycol was used in place of the SP-1. The undulation of the flat plate was 5 to 6 microns and the molding shrinkage of the flat plate was -0.06% (swelling).

Example 7

A low-shrinkage unsaturated polyester resin composition of the present invention and a molding of a flat plate were obtained by following the procedure of Example 1, except that a 80% hydride of liquid isoprene rubber (having a number average molecular weight of 22,000 and an acid number of 15) was used in place of the liquid isoprene rubber. The flat plate showed an undulation of 5 to 7 microns, the molding shrinkage of this flat plate was -0.03% (swelling).

Control 1

A molding for comparison was obtained by faithfully following the procedure of Example 1, except that the use of the liquid isoprene rubber was omitted. This molding showed an undulation of 15 microns. The molding shrinkage of the molding was 0.03%.

Control 2

A SMC and a flat plate as a molding were obtained by following the procedure of Example 1, except that a terminal vinyl polybutadiene (produced by Nippon Soda Co., Ltd. and marketed under the product code of "TE-2000") having an average molecular weight of about 2,000 was used in palce of the liquid isoprene rubber. The flat plate showed an undulation of 10 microns. The molding shrinkage of this falt plate was 0.02%. The surface of the molding was found to be smeared with polybutadiene exuded from the resin composition.

Control 3

An attempt was made to obtain a SMC by following the procedure of Example 1, except that solid isoprene rubber having a number average molecular weight of about 150,000 was used in place of the liquid isoprene rubber. Since the paste had a viscosity of about 10,000 poises, the glass fibers could not be impregnated with the paste.

Example 8

A BMC was obtained by kneading 50 parts of the UP-1 obtained in Example 1, 15 parts of the SP-2 obtained in Example 4, 30 parts of styrene, 5 parts of the same liquid isoprene rubber (having an acid number of 24) as used in Example 2, 1 part of t-butyl peroxybenzoate, 300 parts of calcium carbonate, 5 parts of zinc stearate, 0.6 part of magnesium oxide, and 90 parts of glass fibers (6 mm in length) in a Bumbury type kneader for 2 minutes. The molding consequently obtained showed an undulation of 6 to 7 microns. The molding shrinkage of the molding was -0.06% (swelling). The (Izod flatwise) impact strength of the molding was found to be 22 kg.cm/cm$^2$.

Control 4

A BMC for comparison was obtained by following the procedure of Example 8, except that solid isoprene rubber as used in Control 3 was used in the same amount in place of the liquid isoprene rubber. In this case, the viscosity of the mass of the components being kneaded was so high that 15 minutes' kneading was required for the glass fibers added thereto were impregnated with the resin composition. The impact strength (Izod flatwise) was found to be 12 kg.cm/cm$^2$.

The low-shrinkage unsaturated polyester resin composition of the present invention, owing to the use of specific unsaturated polyester resin comprising a saturated polyester and liquid isoprene rubber or a hydride thereof, enables moldings thereof to enjoy excellent surface smoothness and permits easy conversion into a SMC or BMC as compared with the low-shrinkage resin composition known to the art. The moldings of the resin composition of this invention possess highly satisfactory mechanical strength.

## Claims

1. A low-shrinkage unsaturated polyester resin composition, comprising:
   (a) 20 to 50% by weight of unsaturated polyester having a number average molecular weight of not more than 300 per double bond;
   (b) 25 to 65% by weight of copolymerisable monomer;
   (c) 5 to 25% by weight of a saturated polyester having a number average molecular weight in the range of 3,000 to 30,000; and
   (d) 2 to 20% by weight of liquid isoprene rubber having a number molecular weight in the range of 3,000 to 50,000 or a 10 to 90% hydride thereof, providing that the total amount of components (a), (b), (c), and (d) is 100% by weight.

2. A composition as claimed in Claim 1, characterised in that the liquid isoprene rubber or its hydride has an acid number in the range of 10 to 40.

3. A composition as claimed in Claim 1 or Claim 2, characterised in that the saturated polyester contains, as an acid moiety thereof, more than 50 mol% of at least one dicarboxylic acid selected from adipic acid, isophthalic acid, and terephthalic acid.

4. A composition as claimed in any preceding Claim, characterised in that the saturated polyester contains, as polyhydric alcohol moiety thereof, at least 50 mol% of at least one member selected from ethylene glycol, diethylene glycol, and dipropylene glycol.

5. A composition as claimed in any preceding Claim, characterised in that the liquid isoprene rubber or a 10 to 90% hydride has a number average molecular weight in the range of 7,000 to 30,000 and an acid number in the range of 15 to 30.

6. A composition as claimed in any preceding Claim, characterised in that the hydrogenation ratio of the liquid isoprene rubber is in the range of 60 to 85%.

7. A composition as claimed in Claims 3 to 6, characterised in that the acid moiety of the saturated polyester is adipic acid.

8. A composition as claimed in any of Claims 3 to 6, characterised in that the acid moiety of the saturated polyester is isophtalic acid or terephthalic acid.

9. A composition as claimed in any of Claims 4 to 8, characterised in that the polyhydric alcohol moiety of the saturated polyester is ethylene glycol or diethylene glycol.

10. A composition as claimed in any of Claims 4 to 8, characterised in that the polyhdric alcohol moiety of the saturated polyester is dipropylene glycol.

11. A composition as claimed in Claim 1, characterised in that it comprises (a) 25 to 40% by weight of an unsaturated polyester, (b) 35 to 55% by weight of a copolymerisable monomer, (c) 7 to 20% by weight of a saturated polyester, and (d) 5 to 15% by weight of liquid isoprene rubber or a 10 to 90% hydride thereof.

12. A sheet moulding compound, produced by mixing 100 parts by weight of a low-shrinkage unsaturated polyester resin composition according to any preceding Claim with not more than 400 parts by weight of a powdered inorganic filler and not more than 400 parts by weight of reinforcing fibres and moulding the resultant mixture in the shape of a sheet.

13. A sheet moulding compound as claimed in Claim 12, characterised in that the amount of powdered inorganic filler is in the range of 100 to 300 parts by weight and the amount of reinforcing fibres is in the range of 10 to 300 parts by weight.

**14.** A bulk moulding compound, produced by mixing 100 parts by weight of a low-shrinkage unsaturated polyester resin composition according to any of Claims 1 to 11 with not more than 400 parts by weight of a powdered inorganic filler and not more than 400 parts by weight of reinforcing fibres and moulding the resultant mixture in the shape of a solid.

**15.** A bulk moulding compound as claimed in Claim 14, characterised in that the amount of powdered inorganic filler is in the range of 100 to 300 parts by weight and the amount of reinforcing fibres is in the range of 10 to 300 parts by weight.

## Patentansprüche

**1.** Geringschrumpfende ungesättigte Polyesterharz-Zusammensetzung, bestehend aus:

(a) 20 bis 50 Gew.% eines ungesättigten Polyesters mit einem numerischen Molekulargewichtsmittel von nicht mehr als 300 pro Doppelbindung;

(b) 25 bis 65 Gew.% eines copolymerisierbaren Monomers;

(c) 5 bis 25 Gew.% eines geättigten Polyesters mit einem numerischen Molekulargewichtsmittel im Bereich von 3.000 bis 30.000 und

(d) 2 bis 20 Gew.% eines flüssigen Isopren-Kautschuks mit einem numerischen Molekulargewicht im Bereich von 3.000 bis 50.000 oder ein 10 bis 90 %-iges Hydrid von diesem, wobei der Gesamtbetrag der Komponenten (a), (b), (c) und (d) 100 Gew.% ergibt.

**2.** Zusammensetzung nach Anspruch 1, dadurch gekennzeichnet, daß der flüssige Isopren-Kautschuk oder sein Hydrid eine Säurezahl im Bereich von 10 bis 40 hat.

**3.** Zusammensetzung nach Anspruch 1 oder Anspruch 2, dadurch gekennzeichnet, daß der gesättigte Polyester als in ihm enthaltene Säurekomponente mehr als 50 Mol% wenigstens einer Dicarbonsäure enthält, ausgewählt aus Adipinsäure, Isophthalsäure und Terephthalsäure.

**4.** Zusammensetzung nach einem der vorstehenden Ansprüche, dadurch gekennzeichnet, daß der gesättigte Polyester als in ihm enthaltenen Alkoholteil wenigstens 50 Mol% wenigstens eines Mitglieds der Gruppe Ethylenglycol, Diethylenglycol und Dipropylenglycol enthält.

**5.** Zusammensetzung nach einem der vorstehenden Ansprüche, dadurch gekennzeichnet, daß der flüssige Isopen-Kautschuk oder ein 10 bis 90 %-iges Hydrid ein numerisches Molekulargewichtsmittel im Bereich von 7.000 bis 30.000 hat und eine Säurezahl im Bereich von 15 bis 30.

**6.** Zusammensetzung nach einem der vorstehenden Ansprüche, dadurch gekennzeichnet, daß das Hydrierungsverhältnis des flüssigen Isopren-Kautschuks im Bereich von 60-85 % liegt.

**7.** Zusammensetzung nach einem der Ansprüche 3 bis 6, dadurch gekennzeichnet, daß der Säureteil des gesättigten Polyesters Adipinsäure ist.

**8.** Zusammensetzung nach einem der Ansprüche 3 bis 6, dadurch gekennzeichnet, daß der Säureteil des gesättigten Polyesters Isophthalsäure oder Terephthalsäure ist.

**9.** Zusammensetzung nach einem der Ansprüche 4 bis 8, dadurch gekennzeichnet, daß der mehrwertige Alkohlteil des gesättigten Polyesters Ethylenglycol oder Diethylenglycol ist.

**10.** Zusammensetzung nach einem der Ansprüche 4 bis 8, dadurch gekennzeichnet, daß der mehrwertige Alkoholteil des gesättigten Polyesters Dipropylenglycol ist.

**11.** Zusammensetzung nach Anspruch 1, dadurch gekennzeichnet, daß sie enthält (a) 25 bis 40 Gew.% eines ungesättigten Polyesters (b) 35 bis 55 Gew.% eines coplymerisierbaren Monomers (c) 7 bis 20 Gew.% eines gesättigten Polyesters und (d) 5 bis 15 Gew.% eines flüssigen Isopren-Kautschuks oder eines 10 bis 90 %-igen Hydrids von diesem.

**12.** Formplattenverbundkörper (compound), hergestellt durch Vermischen von 100 Gewichtsteilen einer geringschrumpfenden ungesättigten Polyesterharzzusammensetzung nach einem der vorstehenden Ansprüche mit nicht mehr als 400 Gewichtsteilen eines pulverförmigen anorganischen Füllstoffs und nicht mehr als 400 Gewichtsteilen an Verstärkungsfasern und Formen der erhaltenen Mischung in Form einer Platte.

**13.** Formplattenverbundkörper (compound) nach Anspruch 12, dadurch gekennzeichnet, daß der Anteil an pulverförmigem anorganischen Füllstoff im Berich von 100 bis 300 Gewichtsteilen und der Anteil an Verstärkungsfasern im Bereich von 10 bis 300 Gewichtsteilen liegt.

14. Formmassenverbundkörper (compound), hergestellt durch Vermischen von 100 Gewichtsteilen einer geringschrumpfenden ungesättigten Polyersterharz-Zusammensetzung nach einem der Ansprüche 1 bis 11 mit nicht mehr als 400 Gewichtsteilen eines pulverförmigen anorganischen Füllstoffs und nicht mehr als 400 Gewichtsteilen an Verstärkungsfasern und Formen der erhaltenen Mischung in Form eines festen Körpers.

15. Formmassenverbundkörper (compound) nach Anspruch 14, dadurch gekennzeichnet, daß der Anteil an pulverförmigem anorganischen Füllstoff im Bereich von 100 bis 300 Gewichtsteilen und der Anteil an Verstärkungsfasern im Bereich von 10 bis 300 Gewichtsteilen liegt.

**Revendications**

1. Une composition à base d'une résine de polyester insaturé à faible retrait comprenant :
   (a) de 20 à 50% en masse de polyester insaturé ayant une masse moléculaire moyenne qui n'est pas supérieure à 300 par liaison double ;
   (b) de 25 à 65% en masse de monomère copolymérisable ;
   (c) de 5 à 25% en masse d'un polyester saturé ayant une masse moléculaire moyenne comprise dans la gamme allant de 3.000 à 30.000 ; et
   (d) de 2 à 20% en masse de caoutchouc isoprène liquide ayant une masse moléculaire moyenne compris dan la gamme allant de 3.000 à 50.000 ou un hybride à 10-90% de celui-ci, à condition que la quantité totale des composants (a), (b), (c) et (d) fasse 100% en masse.

2. Une composition selon la Revendication 1, caractérisée en ce que le caoutchouc isoprène liquide ou son hybride ait un nombre d'acide compris dans la gamme allant de 10 à 40.

3. Une composition selon la Revendication 1 ou la Revendication 2, caractérisée en ce que le polyester saturé contient, en tant qu'une portion de celui-ci, plus de 50% en mole d'au moins un acide dicarboxylique choisi à partir de l'acide adipique, de l'acide isophtalique et de l'acide téréphtalique.

4. Une composition selon l'une des Revendications précédentes, caractérisée en ce que le polyester saturé contient, en tant qu'une portion de celui-ci, au moins 50% en mole d'au moins un élément choisi à partir de l'éthylène glycol, du diéthylène glycol et du dipropylène glycol.

5. Une composition selon l'une des Revendications précédentes, caractérisée en ce que le caoutchouc isoprène liquide ou un hybride à 10-90% a une masse moléculaire moyenne comprise dans la gamme allant de 7.000 à 30.000 et un nombre d'acide compris dans la gamme allant de 15 à 30.

6. Une composition selon l'une des Revendications précédentes, caractérisée en ce que le rapport d'hydrogénation du caoutchouc isoprène liquide est compris dans la gamme allant de 60 à 85%.

7. Une composition selon l'une des Revendications 3 à 6, caractérisée en ce que la portion acide du polyester saturé et de l'acide adipique.

8. Une composition selon l'une des Revendications 3 à 6, caractérisée en ce que la portion acide du polyester saturé est de l'acide isophtalique ou de l'acide téréphtalique.

9. Une composition selon l'une des Revendications 4 à 8, caractérisée en ce que la portion alcool polyhydrique du polyester saturé est de l'éthylène glycol ou du diéthylène glycol.

10. Une composition selon l'une des Revendications 4 à 8, caractérisée en ce que la portion alcool polyhydrique du polyester saturé est du dipropylène glycol.

11. Une composition selon la Revendication 1, caractérisée en ce qu'elle comprend (a) de 25 à 40% en masse d'un polyester insaturé, (b) de 35 à 55% en masse d'un monomère copolymérisable, (c) de 7 à 20% en masse d'un polyester saturé, et (d) de 5 à 15% en masse de caoutchouc isoprène liquide ou d'un hybride à 10-90% de celui-ci.

12. Un composé de moulage en feuille produit en mélangeant 100 parties en masse d'une composition à base d'une résine de polyester insaturé à faible retrait selon l'une des Revendications précédentes avec pas plus de 400 parties en masse d'un agent de remplissage inorganique en poudre et avec pas plus de 400 parties en masse de fibres de renforcement, et en moulant le mélange qui en résulte sous la forme d'une feuille.

13. Un composé de moulage en feuille selon la Revendication 12, caractérisé en ce que la quantité d'agent de remplissage inorganique en poudre est comprise dans la gamme allant de 100 à 300 parties en masse et en ce que la quantité de fibres de renforcement est comprise dans la gamme allant de 10 à 300 parties en masse.

14. Un composé de moulage en masse produit en mélangeant 100 parties en masse d'une composition à base d'une résine dé polyester insaturé à faible retrait selon l'une des Revendications 1 à 11 avec pas plus de 400 parties en masse d'un agent de remplissage inorganique en poudre et avec pas plus de 400 parties en masse de fibres de renforcement, et en moulant le mélange qui en résulte sous la forme d'un solide.

15. Un composé de moulage en masse selon la Revendication 14, caractérisé en ce que la quantité d'agent de remplissage inorganique en poudre est comprise dans la gamme allant de 100 à 300 parties en masse et en ce que la quantité de fibres de renforcement est comprise dans la gamme allant de 10 à 300 parties en masse.